# EUROPÄISCHE PATENTSCHRIFT

(11) **EP 3 368 366 B1**
(45) Veröffentlichungstag und Bekanntmachung des Hinweises auf die Patenterteilung: **07.04.2021**
(21) Anmeldenummer: 16788659.7
(22) Anmeldetag: 26.10.2016
(51) Int. Cl.: B60K 15/04

(54) **KRAFTSTOFFBEHÄLTER MIT EINLASSRÜCKSCHLAGVENTIL**
FUEL CONTAINER WITH INLET CHECK VALVE
RÉSERVOIR DE CARBURANT DOTÉ D'UN CLAPET D'ENTRÉE ANTI-RETOUR

(30) Priorität: 29.10.2015 DE 102015221227
(43) Veröffentlichungstag der Anmeldung: 05.09.2018
(73) Patentinhaber: TI Automotive Technology Center GmbH, 76437 Rastatt (DE)
(72) Erfinder: DOLNY, Tomasz, 76530 Baden-Baden (DE); LINDOW, Manuel, 76593 Gernsbach (DE); STICKEL, Martin, 76456 Kuppenheim (DE); BOECKER, Albert J., 76275 Ettlingen (DE)
(74) Vertreter: Gauss, Nikolai
(86) Internationale Anmeldenummer: PCT/EP2016/075720
(87) Internationale Veröffentlichungsnummer: WO 2017/072135

(56) Entgegenhaltungen:
- DE-A1-102007 036 112
- DE-A1-102010 053 994
- US-A1- 2005 139 271
- US-A1- 2005 205 156
- US-A1- 2012 228 292
- US-A1- 2012 298 385

## Beschreibung

Die Erfindung betrifft einen Kraftstoffbehälter mit einem über ein Einlassrückschlagventil in den Kraftstoffbehälter mündenden Einfüllrohr und mit einer Entlüftungseinrichtung zum Ableiten von Kraftstoffdämpfen aus dem Kraftstoffbehälter, wobei die Entlüftungseinrichtung mindestens eine im Inneren des Kraftstoffbehälters verlaufende und mit einem offenen Ende in ein Gasvolumen im Bereich einer oberen Wandpartie des Kraftstoffbehälters mündende Entlüftungsleitung aufweist, wobei die mindestens eine Entlüftungsleitung derart geführt ist, dass sie einen Siphon im Bereich einer unteren Wandpartie bildet, und dass das Einlassrückschlagventil einen Bypassanschluss aufweist, an den die mindestens eine Entlüftungsleitung angeschlossen ist.

Kraftstoffbehälter für Fahrzeuge weisen üblicherweise eine Betriebsbe- und entlüftung auf, um beispielsweise beim Betanken oder bei Temperaturänderungen einen Druckausgleich des Behälterinnenraums zur Umgebung zu ermöglichen. Bekannte Systeme verwenden hierzu ein oder mehrere Ventile, sogenannte Roll Over Valves (ROV), die an unterschiedlichen Orten die obere Behälterwandung durchsetzend angeordnet sind. Das oder die ROV weisen zusätzlich die Eigenschaft auf, bei einem Überschlag des Fahrzeugs zu sperren, so dass Kraftstoff nicht über das Ventil auslaufen kann. Als nachteilig wird bei der Verwendung von ROV angesehen, dass diese einen erheblichen Kostenfaktor darstellen und dass sie die Behälterwandung durchsetzen, also abzudichtende Behälteröffnungen erfordern.

Ein Kraftstoffbehälter der eingangs genannten Art ist aus der US 2005/0205156 A1 bekannt. Bei diesem Kraftstoffbehälter ist jedoch nur eine einzige Entlüftungsleitung vorgesehen, die nicht gegen ein Überfluten in einer Überkopflage des Behälters gesichert ist. Aus der DE 10 2010 053 994 A1 ist ein weiterer Kraftstoffbehälter mit zwei Entlüftungsleitungen bekannt, die jedoch keinen Siphon bilden.

Ausgehend hiervon besteht die Aufgabe der vorliegenden Erfindung darin, einen Kraftstoffbehälter der eingangs genannten Art mit einer einfach und kostengünstig gestalteten Entlüftungseinrichtung zu schaffen, die in jeder Lage des Behälters zuverlässig gegen ein ungewolltes Austreten von Kraftstoff geschützt ist.

Zur Lösung dieser Aufgabe wird die in Patentanspruch 1 angegebene Merkmalskombination vorgeschlagen. Vorteilhafte Ausgestaltungen und Weiterbildungen der Erfindung ergeben sich aus den abhängigen Ansprüchen.

Gemäß der Erfindung sind zwei Entlüftungsleitungen vorgesehen, die derart geführt sind, dass Bögen sowohl im Bereich der unteren Wandpartie als auch der oberen Wandpartie des Kraftstoffbehälters gebildet sind, wobei die oberen Bögen in der Nähe des offenen Endes der jeweils anderen Entlüftungsleitung positioniert sind, so dass sie sich in Schräglage oberhalb des Flüssigkeitspegels befinden und ein Ausströmen von Flüssigkeit über das dann geflutete offene Ende verhindern.

Eine Verbesserung der Druckdichtigkeit der Entlüftungseinrichtung in Überkopflage kann dadurch erreicht werden, dass an dem offenen Ende der mindestens einen Entlüftungsleitung ein Ventil, insbesondere ein Kugelventil, angeordnet ist, das in einer Normallage des Kraftstoffbehälters geöffnet und in einer Kopfüberlage geschlossen ist.

Im Folgenden wird die Erfindung anhand eines in der Zeichnung in schematischer Weise dargestellten Ausführungsbeispiels näher erläutert. Es zeigen
- Fig. 1: einen Kraftstoffbehälter mit einer Entlüftungseinrichtung nach dem Stand der Technik;
- Fig. 2: einen nicht erfindungsgemäßen Kraftstoffbehälter mit einem ersten Ausführungsbeispiel einer Entlüftungseinrichtung mit einer einzelnen Entlüftungsleitung;
- Fig. 3: einen nicht erfindungsgemäßen Kraftstoffbehälter mit einem Ausführungsbeispiel einer Entlüftungseinrichtung mit zwei Entlüftungsleitungen;
- Fig. 4: den Kraftstoffbehälter gemäß Fig. 3 in Schräglage;
- Fig. 5: den Kraftstoffbehälter gemäß Fig. 3 in Überkopflage;
- Fig. 6: den Kraftstoffbehälter gemäß Fig. 3 in Überkopflage und zusätzlichen Ventilen an den freien Enden der Entlüftungsleitungen;
- Fig. 7: einen erfindungsgemäßen Kraftstoffbehälter mit einer Entlüftungseinrichtung mit zwei Entlüftungsleitungen und in Schräglage;
- Fig. 8: den Kraftstoffbehälter gemäß Fig. 7 in Überkopflage; und
- Fig. 9: ein Einlassrückschlagventil mit einer Bypassleitung.

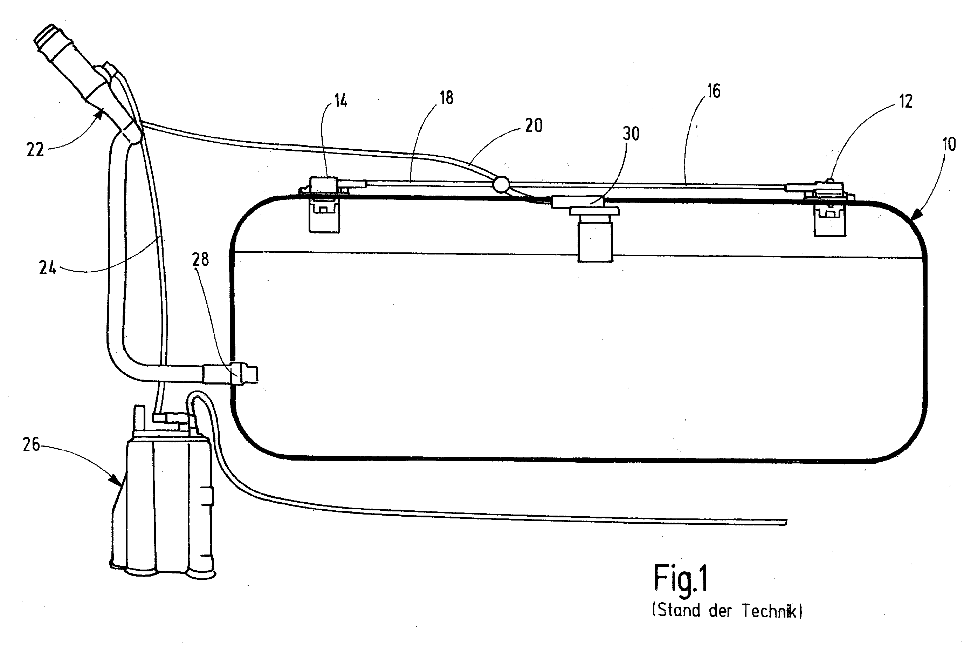

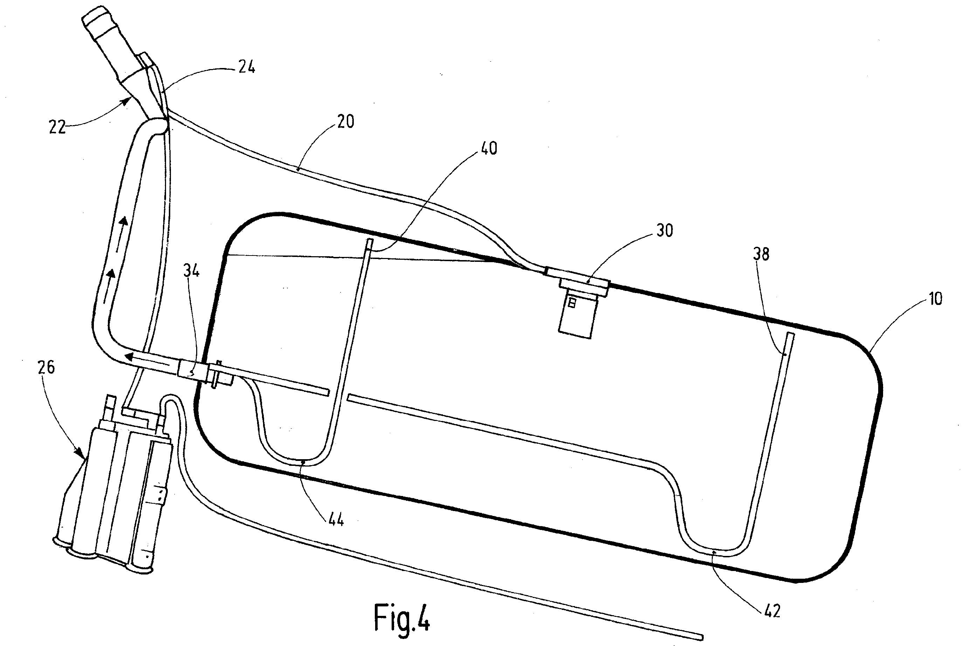

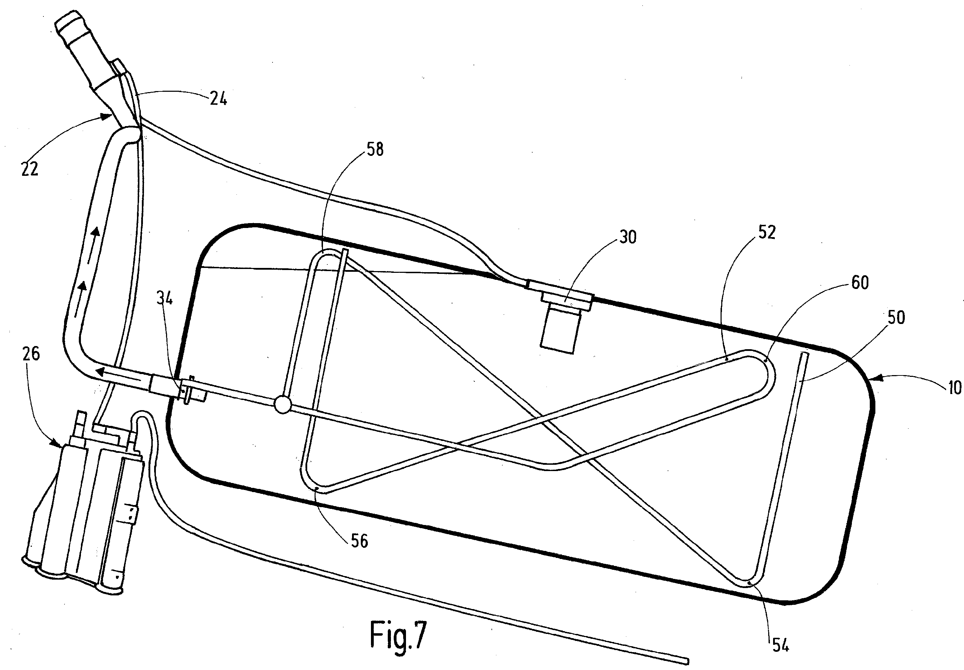

Der in Fig. 1 dargestellte Kraftstoffbehälter 10 weist eine bekannte Entlüftungseinrichtung auf. Diese umfasst zwei zur Entlüftung verwendete, in einer oberen Wandpartie des Kraftstoffbehälters 10 angeordnete Überrollventile (Roll Over Valves - ROV) 12, 14, die über Leitungen 16, 18, 20 mit einem Einfüllrohr 22 kommunizieren, von wo aus Kraftstoffdämpfe über eine Leitung 24 einem Aktivkohlefilter 26 und von dort dem Motor zugeführt werden. Das Einfüllrohr mündet über ein herkömmliches Einlassrückschlagventil 28, das nicht Teil der Entlüftungseinrichtung ist, in den Kraftstoffbehälter 10. Die Ventile 12, 14 sind weit auseinanderliegend angeordnet so dass bei Schräglage des Behälters zumindest eines der Ventile nicht von Flüssigkeit bedeckt ist (vergleichbar der in den Fig. 4 und 7 dargestellten Situation). Die Ventile 12, 14 ragen vergleichsweise weit in den Innenraum des Kraftstoffbehälters 10. Da die Ventile 12, 14 nicht gleichzeitig von flüssigem Kraftstoff bedeckt werden dürfen, wird ein Betankungsvorgang durch das Abschaltventil 30 abgebrochen. Das Volumen des Kraftstoffbehälters kann daher nicht optimal genutzt werden.

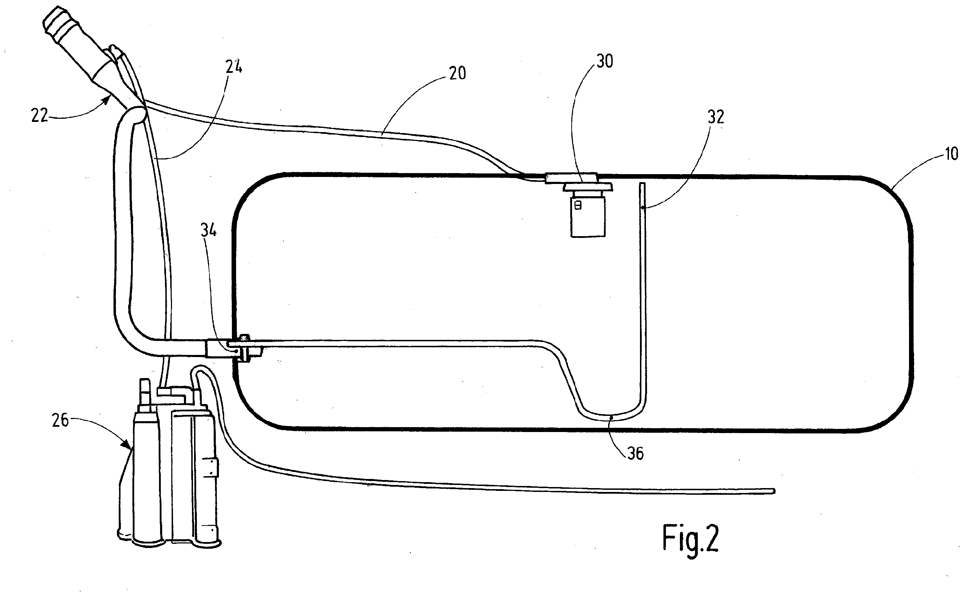

Fig. 2 zeigt ein erstes Ausführungsbeispiel das erheblich kostengünstiger realisiert werden kann als das System der Fig. 1. Es sind keine Überrollventile vorhanden, so dass auch entsprechende Öffnungen in der Behälterwandung nicht erforderlich sind. Stattdessen ist eine im Behälterinneren verlaufende Entlüftungsleitung 32 vorgesehen, deren offenes Ende in unmittelbarer Nähe zur oberen Gehäusewandung angeordnet ist und deren anderes Ende mit einer Bypassleitung an dem Einlassrückschlagventil 34 verbunden ist. Die Entlüftungsöffnung kommuniziert also auch hier mit dem Einfüllrohr 22. Sie ist etwa in der Mitte des Kraftstoffbehälters 10 angeordnet, so dass leichte Schräglagen die Entlüftungsfunktion nicht stören. Durch die weit bis zur Behälterwandung reichende Entlüftungsleitung 32 lässt sich der Kraftstoffbehälter auch zu einem höheren Pegel betanken, so dass die Nutzung des Behältervolumens gegenüber der in Fig. 1 dargestellten Situation verbessert ist. In der Nähe der unteren Wandpartie des Kraftstoffbehälters 10 ist die Entlüftungsleitung 32 in einem einen Siphon bildenden Bogen 36 geführt.

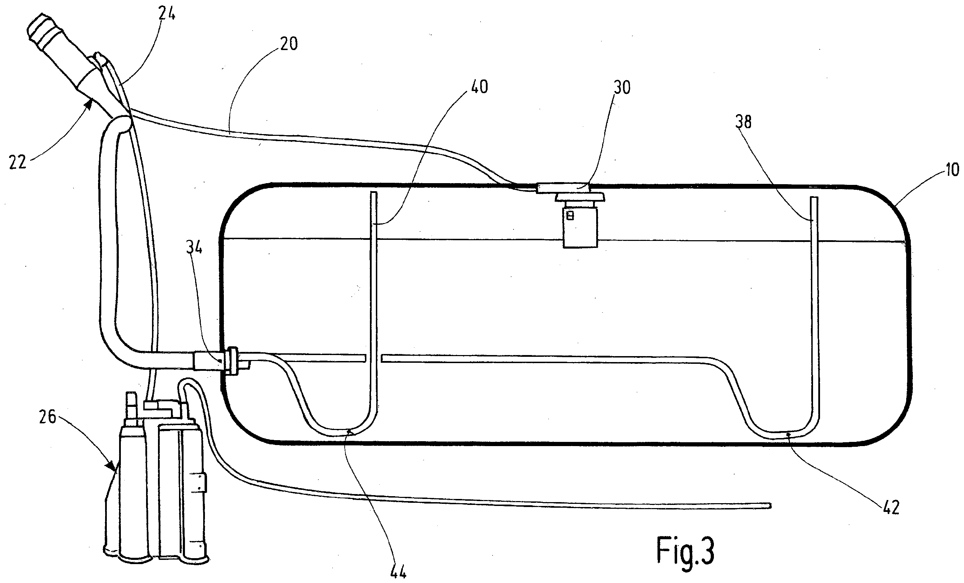

Fig. 3 entspricht Fig. 2, wobei jedoch zwei Entlüftungsleitungen 38, 40 vorhanden sind, deren offene Enden etwa wie die Überrollventile 12, 14 in Fig. 1 angeordnet sind. Dies stellt sicher, dass bei Schräglage, wie in Fig. 4 dargestellt, mindestens eine Entlüftungsleitung in einen Gasraum mündet. Wie die Entlüftungsleitung 32 sind auch die Entlüftungsleitungen 38, 40 im Bereich der unteren Gehäusewandung in einem Bogen geführt.

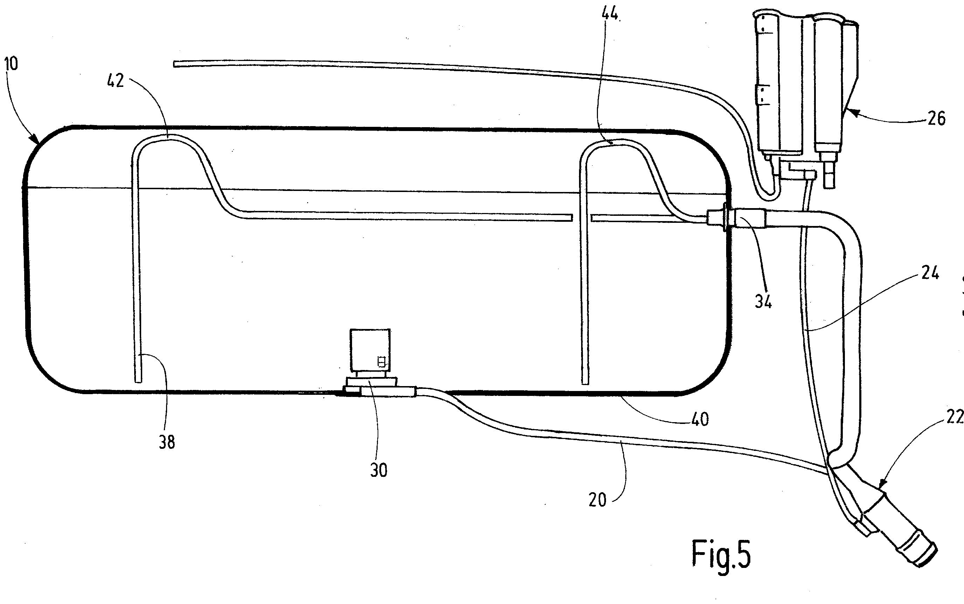

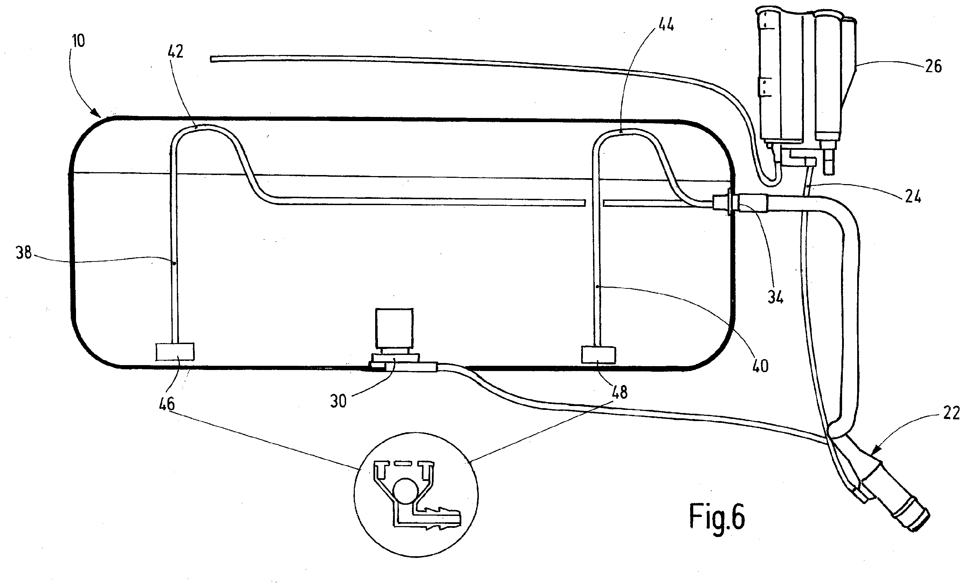

In Fig. 5 befindet sich der Kraftstoffbehälter der Fig. 3 und 4 in einer Kopfüberlage. Die Bögen 42, 44 der Entlüftungsleitungen 38, 40 ragen über den Flüssigkeitspegel hinaus und verhindern durch dort eingeschlossene Kraftstoffdämpfe, das flüssiger Kraftstoff über die Entlüftungsleitungen abläuft. Es ist zwar nicht zu vermeiden, dass eine sehr geringfügige Menge flüssigen Kraftstoffs über die Leitungen 38, 40 in das Einfüllrohr 22 gelangt, jedoch ist durch den Anschluss der Leitung 24 in einem Abstand von dem Ende des Einfüllrohrs 22, also der Bereitstellung eines gewissen Volumens zwischen dem Anschluss der Leitung 24 und dem Ende des Einfüllrohrs 22, sichergestellt, dass kein flüssiger Kraftstoff über die Leitung 24 in den Aktivkohlefilter gelangen kann, was in jedem Fall zu vermeiden ist. Dem genannten Volumen im Endbereich des Einfüllrohrs 22 kommt demnach eine Funktion als Flüssigkeitsabscheider zu. Fig. 6 entspricht Fig. 5, jedoch sind hier an den freien Enden der Entlüftungsleitungen 38, 40 Kugelventile 46, 48 angeordnet, die in Kopfüberlage schließen und so für eine verbesserte Druckhaltefunktion sorgen.

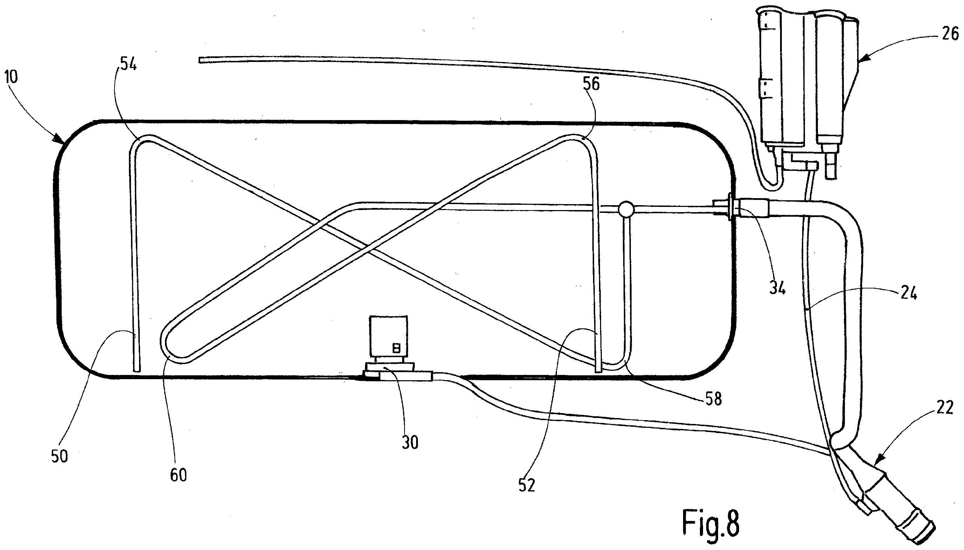

Fig. 7 und 8 zeigen ein erfindungsgemäßes Ausführungsbeispiel mit zwei Entlüftungsleitungen 50, 52, die derart geführt sind, dass Bögen 54, 56, 58, 60 sowohl im Bereich der unteren Wandpartie als auch der oberen Wandpartie des Kraftstoffbehälters 10 gebildet sind. Die oberen Bögen 58, 60 sind in der Nähe des offenen Endes der jeweils anderen Entlüftungsleitung 50, 52 positioniert, so dass sie sich in Schräglage oberhalb des Flüssigkeitspegels befinden und ein Ausströmen von Flüssigkeit über das dann geflutete offene Ende verhindern.

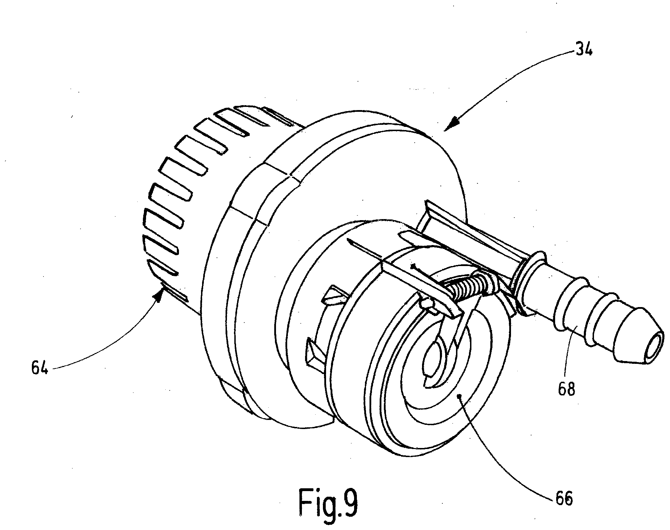

Fig. 9 zeigt ein Einlassrückschlagventil 34, das eine Anschlusspartie 64 für die Verbindung mit dem Einfüllrohr 22 und eine federbelastete Rückschlagklappe 66 aufweist, die beim Betanken zur Behälterinnenseite hin öffnet. Weiterhin weist das Ventil eine die Rückschlagklappe überbrückende Bypassleitung 68 mit einem Anschlussnippel für die mindestens eine Entlüftungsleitung auf, über die diese mit dem Einfüllrohr in Fluidkommunikation steht.
klappe 66 aufweist, die beim Betanken zur Behälterinnenseite hin öffnet. Weiterhin weist das Ventil eine die Rückschlagklappe überbrückende Bypassleitung 68 mit einem Anschlußnippel für die mindestens eine Entlüftungsleitung auf, über die diese mit dem Einfüllrohr in Fluidkommunikation steht.

## Patentansprüche

1. Kraftstoffbehälter (10) mit einem über ein Einlassrückschlagventil (34) in den Kraftstoffbehälter (10) mündenden Einfüllrohr (22) und mit einer Entlüftungseinrichtung zum Ableiten von Kraftstoffdämpfen aus dem Kraftstoffbehälter (10), wobei die Entlüftungseinrichtung mindestens eine im Inneren des Kraftstoffbehälters (10) verlaufende und mit einem offenen Ende in ein Gasvolumen im Bereich einer oberen Wandpartie des Kraftstoffbehälters (10) mündende Entlüftungsleitung (32; 38, 40; 50, 52) aufweist, wobei die mindestens eine Entlüftungsleitung (32; 38, 40; 50, 52) derart geführt ist, dass sie einen Siphon im Bereich einer unteren Wandpartie bildet, und dass das Einlassrückschlagventil (34) einen Bypassanschluss (68) aufweist, an den die mindestens eine Entlüftungsleitung (32; 38, 40; 50, 52) angeschlossen ist, **gekennzeichnet durch** zwei Entlüftungsleitungen (50, 52), die derart geführt sind, dass Bögen (54, 56, 58, 60) sowohl im Bereich der unteren Wandpartie als auch der oberen Wandpartie des Kraftstoffbehälters (10) gebildet sind, wobei die oberen Bögen (58, 60) in der Nähe des offenen Endes der jeweils anderen Entlüftungsleitung (50, 52) positioniert sind, so dass sie sich in Schräglage oberhalb des Flüssigkeitspegels befinden und ein Ausströmen von Flüssigkeit über das dann geflutete offene Ende verhindern.

2. Kraftstoffbehälter (10) nach Anspruch 1, **dadurch gekennzeichnet, dass** an dem offenen Ende der mindestens einen Entlüftungsleitung (32; 38, 40; 50, 52) ein Ventil, insbesondere ein Kugelventil (46, 48), angeordnet ist, das in einer Normallage des Kraftstoffbehälters (10) geöffnet und in einer Kopfüberlage geschlossen ist.

## Claims

1. Fuel tank (10) comprising a filler pipe (22) which opens into the fuel tank (10) via an inlet check valve (34), and comprising a venting device for discharging fuel vapors from the fuel tank (10), the venting device having at least one venting line (32; 38, 40; 50, 52) which extends in the interior of the fuel tank (10) and opens at an open end into a gas volume in the region of an upper wall part of the fuel tank (10), the at least one venting line (32; 38, 40; 50, 52) being guided such that it forms a siphon in the region of a lower wall part, and that the inlet check valve (34) has a bypass connection (68) to which the at least one venting line (32; 38, 40; 50, 52) is connected, **characterized by** two venting lines (50, 52) which are guided in such a way that curves (54, 56, 58, 60) are formed both in the region of the lower wall part and of the upper wall part of the fuel tank (10), the upper curves (58, 60) being positioned close to the open end of the relevant other venting line (50, 52), such that said curves are above the liquid level in an inclined position and prevent liquid from flowing out via the open end which is then flooded.

2. Fuel tank (10) according to claim 1, **characterized in that** a valve, in particular a ball valve (46, 48), is arranged at the open end of the at least one venting line (32; 38, 40; 50, 52), which valve is open in a normal position of the fuel tank (10) and is closed in an upside-down position.

## Revendications

1. Réservoir de carburant (10) avec un tuyau de remplissage (22) débouchant dans le réservoir de carburant (10) par l'intermédiaire d'un clapet d'entrée anti-retour (34) et avec un dispositif de dégazage pour évacuer les vapeurs de carburant hors du réservoir de carburant (10), le dispositif de dégazage comprenant au moins une conduite de dégazage (32 ; 38, 40 ; 50, 52) s'étendant à l'intérieur du réservoir de carburant (10) et débouchant avec une extrémité ouverte dans un volume de gaz dans la zone d'une section de paroi supérieure du réservoir de carburant (10), l'au moins une conduite de dégazage (32 ; 38, 40 ; 50, 52) étant guidée de telle sorte qu'elle forme un siphon dans la zone d'une section de paroi inférieure, et que le clapet d'entrée anti-retour (34) comprend un raccord de dérivation (68) auquel l'au moins une conduite de dégazage (32 ; 38, 40 ; 50, 52) est raccordée, **caractérisé par** deux conduites de dégazage (50, 52) qui sont guidées de telle sorte que des arcs (54, 56, 58, 60) sont formés à la fois dans la zone de la section de paroi inférieure et dans la zone de la section de paroi supérieure du réservoir de carburant (10), les arcs supérieurs (58, 60) étant positionnés à proximité de l'extrémité ouverte de l'autre conduite de dégazage (50, 52) respective, de sorte qu'ils se trouvent inclinés au-dessus du niveau de liquide et empêchent un écoulement de liquide par l'extrémité ouverte alors immergée.

2. Réservoir de carburant (10) selon la revendication 1, **caractérisé en ce qu'**un clapet, en particulier un clapet à bille (46, 48), est disposé à l'extrémité ouverte de l'au moins une conduite de dégazage (32 ; 38, 40 ; 50, 52), lequel clapet est ouvert dans une position normale du réservoir de carburant (10) et est fermé dans une position à l'envers.
